# EUROPEAN PATENT SPECIFICATION

(11) **EP 2 813 409 B1**
(45) Date of publication and mention of the grant of the patent: **05.12.2018**
(21) Application number: 14171955.9
(22) Date of filing: 11.06.2014
(51) Int. Cl.: B61C 15/14, B60T 8/172, B61K 9/08

(54) **System and method for determining effectiveness of a friction modifier along a route segment**
System und Verfahren zur Bestimmung der Wirksamkeit eines Reibungsmodifizierungsmittels entlang eines Streckenabschnitts
Système et procédé permettant de déterminer l'efficacité d'un modificateur de frottement le long d'un segment de route

(30) Priority: 12.06.2013 US 201361834395 P; 22.08.2013 US 201313973016
(43) Date of publication of application: 17.12.2014
(73) Proprietor: General Electric Company, Schenectady, NY 12345 (US)
(72) Inventor: Kumar, Ajith Kuttannair, Erie, PA Pennsylvania 16509 (US); Noffsinger, Joseph Forrest, Grain Valley, MO Missouri 64029 (US)
(74) Representative: Illingworth-Law, William Illingworth

(56) References cited:
- WO-A1-00/17625
- US-A1- 2004 060 375
- US-A1- 2005 065 701
- US-A1- 2007 001 629

## Description

### BACKGROUND

Embodiments of the subject matter described herein relate to systems and methods of determining a condition of a route that is traversed by a vehicle system.

US 2004/0060375 A1 discloses assessing the health of a locomotive sanding system by recognizing a change in friction that occurs when sand in introduced to the wheel/rail interface.

The ability of a vehicle system to provide tractive efforts for propelling the vehicle system along a route is dependent upon the friction between a propulsion-generating component (e.g., wheel) and a surface of the route. Monitoring and controlling this friction may lead to the reduction in operating costs. For example, routes for rail vehicle systems (e.g., locomotives, tram lines, monorails, subways, mining equipment, and the like) typically include tracks (e.g., rails) that are traversed by the vehicle systems. In many cases, the forces applied by such rail vehicle systems provide a significant amount of stress and wear on the rails of the tracks and certain components of the rail vehicle systems. Railroad owners often monitor rail conditions to ensure that the locomotives can operate efficiently. For instance, it is often desirable that the coefficients of friction (COFs) (or other friction metrics) of the rails are within a designated range to (a) reduce wearing of the rails and wearing of the wheels of the locomotives and/or (b) to obtain a desired adhesion between the rails and the wheels. To this end, railroads may apply a lubricant to the rails to reduce the COF. Reducing the COF may not only reduce the wear on rails and wheels, but may also lead to fuel savings. In other cases, railroads may desire a greater adhesion and, thus, apply a substance that increases the adhesion between the wheels and rails.

To monitor the COF or other friction metric, railroads may test a number of points along the rails with a tribometer. For example, once a month (or other frequency) a railroad may take a series of measurements along a segment of the track, such as a curve of the track. The segment of the track may extend for a substantial distance, such as a half mile or mile. The measurements are often taken manually in which an inspector walks along the track with the tribometer riding the rail.

This conventional measurement process, however, can be cumbersome and can take a substantial amount of time. On some occasions, the process can even disrupt rail traffic. Furthermore, railroads are often responsible for overseeing thousands of miles of tracks and may have hundreds of route segments that are frequently tested. Hundreds of instruments may be necessary to sufficiently monitor these route segments. Such instruments may, at times, become faulty or have an undetected measurement bias that leads to incorrect data. Accordingly, the costs of monitoring the rails can be large and difficult to manage.

### BRIEF DESCRIPTION

The present invention is defined in the accompanying claims.

In an embodiment, a method is provided that includes obtaining creep measurements and tractive/braking measurements from at least one vehicle system at different locations along a route segment while the at least one vehicle system moves through the route segment. The method also includes calculating tribology characteristics of the route segment at the different locations. The tribology characteristics are based on the creep measurements and the tractive/braking measurements from the at least one vehicle system. The tribology characteristics are indicative of a friction coefficient of the route segment at the different locations. The method also includes determining an effectiveness of a friction modifier applied to the route segment based on the tribology characteristics.

In another embodiment, a system (e.g., monitoring system) is provided that includes a receiver configured to receive creep measurements and tractive/braking measurements from at least one vehicle system at different locations along a route segment while the at least one vehicle system moves through the route segment. The system also includes a calculation module configured to calculate tribology characteristics of the route segment at the different locations. The tribology characteristics are based on the creep measurements and the tractive/braking measurements from the at least one vehicle system. The tribology characteristics are indicative of a friction coefficient of the route segment at the different locations. The system also includes an analysis module configured to determine an effectiveness of a friction modifier applied to the route segment based on the tribology characteristics at the different locations.

In another aspect, a system (e.g., control system of a vehicle system) is provided that includes a vehicle-control module configured to control tractive and braking operations of a vehicle system. The system also includes a measurement module configured to obtain creep measurements and tractive/braking measurements of the vehicle system at different locations along a route segment while the vehicle system moves through the route segment. The system also includes a transmitter configured to communicate the creep measurements and the tractive/braking measurements from the vehicle system. The vehicle-control module is configured to increase the tractive effort of a first wheelset by a designated amount and decrease the tractive effort of a second wheelset by the designated amount thereby maintaining a total tractive effort of the vehicle system. The measurement module is configured to obtain the creep measurements and the tractive/braking measurements when the first and second wheelsets operate at increased and decreased tractive efforts, respectively.

### BRIEF DESCRIPTION OF THE DRAWINGS

Figure 1 is a schematic diagram of an embodiment of a vehicle system traversing a track.
Figure 2 is a schematic diagram of two propulsion-generating vehicles that are linked to each other in accordance with an embodiment.
Figure 3 is a flowchart illustrating a method in accordance with an embodiment.
Figure 4 illustrates a graph with representative traction-creep curves.
Figure 5 illustrates a graph including representative curves that demonstrate a relationship between calculated tribology characteristics and locations within a route segment.

### DETAILED DESCRIPTION

Embodiments of the inventive subject matter described herein include methods and systems for monitoring one or more tribology characteristics of a route that is traversed by a vehicle system. Tribology is a branch of engineering that relates to the friction, wear, and/or lubrication between surfaces, such as the two surfaces that define the wheel-rail interface. Tribology may be used to describe an effectiveness of a friction modifier that has been applied to the route. For example, after a friction modifier has been applied to a region-of-interest of a route, vehicle systems traversing the route spread the friction modifier along surfaces of the route. It may be desirable to know (a) whether the friction modifier has spread beyond the region-of-interest and/or (b) whether the friction modifier remaining within the region-of-interest is sufficient to achieve the target effect. As such, embodiments may obtain and/or analyze tribology data to determine the effectiveness of the friction modifier along the designated segment of the route. In one specific example, embodiments may obtain and/or analyze tribology data to determine the effectiveness of a friction modifier along a designated segment of a track that is traveled along by rail vehicle systems (e.g., locomotives). Tribology data provides information regarding friction along the route. The tribology data may include, for example, coefficients of friction COFs (or friction coefficients), adhesion coefficients, or other friction metrics at different locations along the route.

A vehicle system includes at least one propulsion-generating vehicle that generates vehicle tractive efforts (TEs) for propelling the vehicle system. The propulsion-generating vehicle may also generate vehicle braking efforts (BEs) for slowing or stopping the vehicle system. A vehicle system may include multiple propulsion-generating vehicles. In such instances, the multiple propulsion-generating vehicles may be arranged to form a single vehicle consist or a plurality of vehicle consists. In some embodiments, the propulsion-generating vehicles of a single vehicle consist are configured to communicate with each other to coordinate vehicle TEs and/or vehicle BEs. Vehicle systems may also include multiple vehicle consists. In some cases, the vehicle consists may communicate with one another.

As used herein, a "vehicle TE" refers to the tractive effort provided by a single propulsion-generating vehicle (e.g., locomotive). An "axle TE" refers to the tractive effort provided by a single wheelset or axle of a propulsion-generating vehicle. In some cases, a propulsion-generating vehicle may have individually controllable wheelsets. For example, the traction motors on a single locomotive may be selectively controlled such that it is possible to provide different tractive and/or braking efforts among the wheelsets of the locomotive. A first wheelset may provide 30 klbs (about 13,600 kg) of TE and a second wheelset may provide 10 klbs of TE (about 4,500 kg). Thus, the axle TEs of the first and second wheelsets are 30 klbs (about 13,600 kg) and 10 klbs (about 4,500 kg), respectively. A "system TE" refers to the total tractive effort provided by a vehicle system, which may include plural propulsion-generating vehicles or only one propulsion-generating vehicle. Thus, for cases in which the vehicle system has only a single propulsion-generating vehicle, the system TE is equal to a vehicle TE.
A route segment is a portion of the route that includes a region-of-interest and, optionally, one or more baseline portions extending from the region-of-interest. The route segment may be referred to as a "track segment" for embodiments that include rail vehicle systems (e.g., locomotives). The region-of-interest may have had a friction modifier directly applied to the rails within the region-of-interest. As such, the region-of-interest may also be referred to as a surface-modified portion of the route. Non-limiting examples of regions-of-interest include curves, heavily trafficked segments, or segments that have been affected by environmental conditions (e.g., snowfall, leaves, mud, and the like). In some cases, it may be suspected that the friction modifier has spread beyond the region-of-interest and into the baseline portion(s).

The region-of-interest may be the entire route segment or only a portion of the route segment. A precise length or dimension of the route segment may be determined before analyzing the tribology data or only after analyzing the tribology data. For example, although it may be known before analysis that the friction modifier was directly applied between mile post 214 and mile post 215, it may not be known an extent of spreading beyond the mile post 214 and beyond the mile post 215. Accordingly, only after analyzing the data may it be determined that the route segment extends between, for example, the mile post 213 and the mile post 216.

Embodiments described herein may obtain creep measurements and tractive/braking measurements as a vehicle system is traveling along a route segment. A creep measurement may be based on an amount of slippage of one or more wheels during operation of the vehicle system. Maximum tractive or braking effort may be obtained if each wheel of the propulsion-generating vehicle is rotating at such an angular velocity that its actual peripheral speed is slightly higher (for traction) or slightly lower (for braking) than the true vehicle speed, which may be referred to as the "ground speed" or "track speed" of the propulsion-generating vehicle. The difference between wheel speed and track speed may be referred to as "slip speed." There is a relatively low limit value of slip speed at which a peak tractive effort or braking effort is realized. This value, which may be referred to as a "maximum creep speed" or "optimum creep," is a variable that depends on track speed and rail conditions. Provided that the maximum creep speed is not exceeded, slip speed is normal and the propulsion-generating vehicle will operate in a stable microslip or creep mode. If wheel-to-rail adhesion is reduced or lost, however, some or all of the wheels may slip excessively. In other words, wheels may slip when the actual slip speed is greater than the maximum creep speed. This may cause a wheel slip condition. A wheel slip condition that occurs during a tractive operation may include one or more spinning wheels. A wheel slip condition that occurs during a braking operation may include one or more sliding or skidding wheels.

Creep measurements may also be referred to as or characterized as wheel slip, wheel creep, slip speed. In some embodiments, creep measurements can be expressed as a percentage of the current speed (e.g., ground speed, track speed) or a value above/below the current speed. In some embodiments, a creep measurement is obtained, at least in part, by calculating a difference between a ground speed (e.g., speed at which the propulsion-generating vehicle or the vehicle system is traveling) and a wheel speed (e.g., angular velocity of the wheel). Creep measurements may be acquired in other manners. For example, creep measurements may be detected by an abrupt change in the traction motor current or an abrupt change in the revolutions per minute (rpms) of the traction motor or axle. Another manner of detecting creep measurements may include using a rotary sensor on the traction motor or drive axle. Other manners of obtaining creep measurements may be used.

The creep measurement and the tractive/braking operation may be acquired at approximately the same time such that useful tribology data may be obtained regarding a designated portion or point along the track. For instance, the measurements may be acquired simultaneously, concurrently, or immediately after each other. In some embodiments, one creep measurement is correlated or associated with one tractive/braking measurement. In other embodiments, however, multiple creep measurements may be correlated or associated with one tractive/braking measurement or one creep measurement may be correlated or associated with multiple tractive/braking measurements. As an example, first, second, and third tractive measurements may be obtained at 30 meters, 60 meters, and 90 meters, respectively, but only one creep measurement may be obtained between 30 and 90 meters. In such instances, the single creep measurement may be paired with each of the first, second, and third tractive measurements when the tribology data is analyzed.

In some cases, an average of the multiple measurements (e.g., creep and/or tractive/braking) may be calculated and the averaged measurement may be communicated. In some cases, one or more measurements may be specific to an axle or wheelset while other measurements are associated with a propulsion-generating vehicle as a whole. For example, the creep measurement may be associated with a locomotive, but the tractive/braking measurement may be related to a specific wheelset of the locomotive or vice-versa. Creep and tractive/braking measurements that are associated with each other may also be associated with a specific region of the track. By way of example, a region along the track (e.g., 0.25 km to 0.28 km) may be associated with a calculated/detected creep measurement and associated with a calculated/detected TE measurement.

Tractive/braking measurements (which may also be referred to as "at least one of tractive and braking measurements") include measurements that are based on or indicative of tractive effort (or horsepower) and measurements that are based on or indicative of braking efforts. Tractive/braking measurements may be obtained by monitoring or detecting motor characteristics, such as motor current, motor RPMs, motor torque, and motor power. In some cases, tractive/braking measurements may be acquired by monitoring or detecting inter-vehicle forces (e.g., using a coupling hook between locomotive and load) or measuring a vehicle speed. TE may be characterized as an amount of force that the motive power must produce to move a train without slipping the wheels. TE may be detected by sensors and/or may be calculated by acquiring other measurements. TE may be calculated by multiplying an adhesion coefficient with an appropriate weight parameter (e.g., weight of the locomotive, weight per axle, and the like). More specifically, a maximum TE value may be directly proportional to weight and adhesion. TE may also be calculated by dividing horsepower by speed. Braking measurements may be acquired in a similar manner as acquiring TE measurements.

As described herein, embodiments may use the creep measurements and tractive/braking measurements to determine a tribology characteristic that is then used to determine an effectiveness of a friction modifier (e.g., lubrication, sand, or other substance, and air). The tribology characteristic may be an adhesion coefficient, a COF, or the like. A friction modifier may increase or decrease friction. For example, lubrication may reduce the COF or adhesion coefficient whereas sand may increase the COF. In some cases, the tribology characteristic may be calculated after attempting to remove at least some of the friction modifier by blowing with air or wiping with another surface.

In some embodiments, the measurements are acquired during normal operation of the vehicle system. For example, the measurements may be acquired without deviating from an operating plan or without deviating from inputs or instructions from an operator (e.g., engineer). An operating plan, which may also be referred to as a trip plan or mission plan, may include instructions for controlling the propulsion-generating vehicles to provide designated TEs and/or designated BEs for predetermined portions of a trip. The instructions may be expressed as a function of time and/or distance of a trip along a route. The vehicle system may be autonomously controlled according to the operating plan or the instructions of the operating plan may be presented to an operator of the vehicle system so that the operator can manually control the vehicle system according to the operating plan (also referred to as a "coaching mode"). The operating plans may be based on trip profiles, which may include, among other things, information about a geography of the route. The operating plans may also be based on operating information of the vehicle system, such as the size, weight, tractive effort, power output, weight distribution, and the like, of the vehicle system.

As used herein, a "vehicle system" may include a single propulsion-generating vehicle or multiple propulsion-generating vehicles. For those embodiments that include multiple propulsion-generating vehicles, the multiple propulsion-generating vehicles may be arranged into a single vehicle consist or a plurality of vehicle consists. As one specific example, a train may include first, second, and third locomotive consists, wherein each of the locomotive consists includes two locomotives.

At least one technical effect of embodiments described herein may include a more efficient use of a friction modifier. For example, embodiments may identify different locations and/or different amounts of the friction modifier to apply to the rails. Another technical effect may include a more efficient use of vehicle systems. With more tribology data and with tribology data that is more current than data obtained through conventional methods, the vehicle systems may be operated in a more efficient manner.

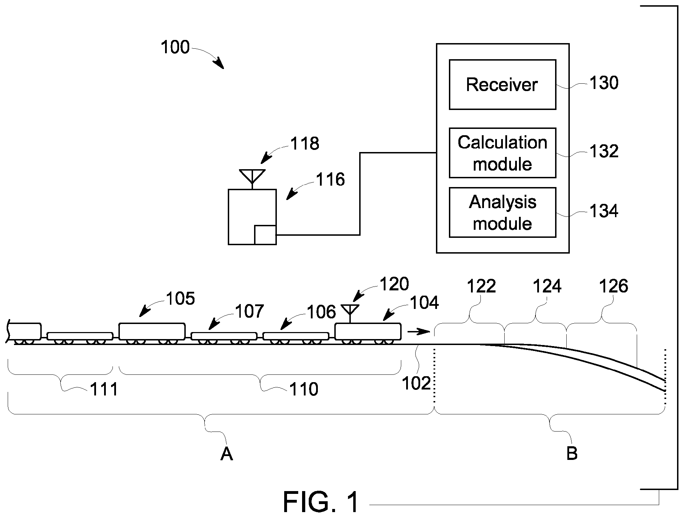

Figure 1 is a schematic diagram of a vehicle system 100 formed in accordance with an embodiment. In the illustrated embodiment, the vehicle system 100 is a rail vehicle system. As shown, the vehicle system 100 is traveling along a portion of a route or track 102. While only one vehicle system 100 is shown in Figure 1, it is understood that several vehicle systems may traverse the track 102. The vehicle system 100 includes a plurality of discrete vehicles. As used herein, "discrete" vehicles are separate and distinct vehicles that are capable of being removably coupled to and part of a larger vehicle system. The vehicle system 100 may be a rail vehicle system that includes at least one propulsion-generating vehicle (e.g., locomotive) and, optionally, at least one non-powered vehicle (e.g., rail car or passenger car) that are linked to one another.

In the illustrated embodiment, the vehicle system 100 includes propulsion-generating vehicles 104 and 105 and non-powered vehicles 106 and 107 that are mechanically linked to one another and are configured to travel as a group along the track 102. The terms "powered" or "propulsion-generating" refer to the capability of a vehicle to propel itself and not whether the vehicle receives or generates energy for one or more other purposes. For example, the non-powered vehicles 106, 107 may receive electric current to power one or more loads disposed onboard the non-powered vehicles 106, 107 (e.g., air conditioning, lighting, etc.).

In Figure 1, the propulsion-generating vehicle 104 may be considered a principal or lead vehicle of a vehicle consist 110, and the propulsion-generating vehicle 105 may be considered a remote vehicle of the vehicle consist 110. A propulsion-generating vehicle that controls one or more other propulsion-generating vehicles may be referred to as "principal" or "lead" propulsion-generating vehicle, and propulsion-generating vehicles that are controlled by another propulsion-generating vehicle may be referred to as "remote" propulsion-generating vehicles. The plurality of propulsion-generating vehicles 104, 105 in the single vehicle consist 110 are configured to operate as a single moving apparatus. For example, the multiple propulsion-generating vehicles 104, 105 may coordinate TEs and/or BEs to propel the vehicle system 100 along the track 102. The propulsion-generating vehicles 104, 105 may also coordinate the acquisition of creep and/or tractive/braking measurements as described herein.

A vehicle system may be or include a single vehicle consist or include a plurality of vehicle consists that are directly or indirectly coupled to another. For example, the vehicle system 100 includes a second vehicle consist 111 that is coupled to the vehicle consist 110. When a vehicle system includes multiple vehicle consists, the vehicle consists may be referred to as sub-consists. If the vehicle system includes multiple vehicle consists, the vehicle consists may be configured to operate as a single moving apparatus. For example, the multiple vehicle sub-consists may be controlled by a master computing system that coordinates tractive and/or braking efforts among the sub-consists to control operation of the vehicle system as a whole. The master control system may also include instructions for acquiring creep and/or tractive/braking measurements as described herein.

In some embodiments, the vehicle system 100 has a distributed power system or is capable of operating in different modes. In a distributed power system, different propulsion-generating vehicles (or different vehicle consists) are capable of being controlled by a common control system, which may be on a principal vehicle. For example, a single vehicle system may include first and second propulsion-generating vehicles. A common control system for the vehicle system may instruct the first and second propulsion-generating vehicles in a manner that coordinates TEs and/or BEs of the vehicle system. More specifically, the common control system may communicate signals to the first and second propulsion-generating vehicles that include operating instructions. The common control system, however, may communicate different instructions to each of the propulsion-generating vehicles. For example, the first propulsion-generating vehicle may be instructed to operate at a high notch (or throttle) setting. At the same time, the second propulsion-generating vehicle may be instructed to operate at a lower notch setting or to apply brakes to the propulsion-generating vehicle. The common control system may be part of a single vehicle, may be distributed among the vehicles, or may be a remote system that controls the vehicle system wirelessly.

Likewise, a common control system may instruct multiple vehicle consists. As one specific example, a vehicle system may include a leading vehicle consist and a trailing vehicle consist. As this vehicle system is traversing a mountain, the leading vehicle consist may crest the mountain top and travel on the downward slope of the mountain. At this time, the common control system may instruct the leading vehicle consist to cease tractive efforts and commence braking. The trailing vehicle consist, however, may not have passed the mountaintop and may still be climbing the mountain. If so, the common control system may instruct the trailing vehicle consist to maintain tractive efforts. By operating the leading and trailing vehicle consists in a different manner, tensile forces at the mechanical couplers that connect adjacent vehicles may be reduced. Accordingly, different propulsion-generating vehicles or different vehicle consists of a single vehicle system may operate asynchronously or independent from each other. This may also be referred to as operating according to an asynchronous mode, independent mode, or decoupled mode.

It is noted that the embodiment of Figure 1 is provided for illustrative purposes only, and other arrangements, orientations, and/or numbers of propulsion-generating vehicles and/or non-powered vehicles may be used in other embodiments. In some embodiments, the propulsion-generating vehicle 104 may control the operations of other propulsion-generating vehicles, such as the propulsion-generating vehicle 105. In other embodiments, a propulsion-generating vehicle other than the propulsion-generating vehicle 104 may act to control the operations of one or more other propulsion-generating vehicles. For example, the propulsion-generating vehicle 105 may control operations of the propulsion-generating vehicle 104. In some cases, the principal vehicle that controls the vehicle system 100 is the leading vehicle (e.g., first vehicle) that controls operation of other vehicles. In other cases, the principal vehicle may follow or trail other propulsion-generating vehicles while traveling.

Figure 1 also shows two route segments A and B along the track 102. As shown, the vehicle system 100 is traveling along the route segment A in a left-to-right direction along the page. Each of the route segments A and B may have a different track condition. The track condition may be, at least in part, based on the friction between a surface of the track and a surface of the vehicle system that directly engages the surface of the track, such as the surface of a wheel. The track condition may also be based on a contour (e.g., grade or curvature) of the track. With respect to Figure 1, the route segment A represents a portion of the track 102 that has a substantially straight and even route contour.

Route segment B illustrates a route segment that includes a region-of-interest 124, which is a curve in Figure 1. In other embodiments, the region-of-interest may include other track contours and/or tracks with various types of rail conditions. In particular embodiments, the region-of-interest is a portion of a track that has had a friction modifier applied to the rails. The friction modifier may be applied to effectively increase or decrease the COF or adhesion coefficient. Lubricants may be used to decrease the COR or adhesion coefficient. Non-limiting examples of friction modifiers that may be used to increase the COR or adhesion coefficient include sand (e.g., sandite), composition sticks (e.g., Kelsan HPF sticks), suspensions of colloidal silica particles, ethyl caprylate, tertiary butylamine solution, sodium metasilicate, or a mixture of any of the above.

As described herein, entities may desire to know whether the friction modifier is effective within the localized region in which it was applied and whether the friction modifier has undesirably spread into other portions of the route segment. Accordingly, embodiments described herein may acquire a number of measurements to analyze the effectiveness of the friction modifier. The measurements may be creep measurements, tractive/braking measurements, and other measurements that facilitate the analysis. In addition to the region-of-interest 124, measurements may also be acquired within baseline portions 122 and 126 of the route 102. Due to the travel direction of the vehicle system 100, the baseline portion 122 is the leading baseline portion and the baseline portion 126 is the trailing baseline portion. In the illustrated embodiment, each of the baseline portions 122 and 126 are substantially straight relative to the region-of-interest 124. In other embodiments, however, the baseline portions 122, 126 and the region-of-interest 124 may have various contours relative to each other. In some embodiments, the region-of-interest 124 is also substantially straight and even.

Also shown in Figure 1, the vehicle system 100 may communicate with an off-board system 116 (e.g., monitoring system) that can be disposed off-board (e.g., outside) of the vehicle system 100. For example, the system 116 may be disposed at a central dispatch office for a railroad company. The system 116 can generate and communicate various operating plans and/or communicate information regarding track conditions. The system 116 may also include one or more modules for receiving and analyzing the measurements acquired by the vehicle system 100. The system 116 can include a wireless antenna 118 (and associated transceiving equipment), such as a radio frequency (RF) or cellular antenna, that wirelessly transmits signals to the vehicle system 100. The vehicle system 100 may also include a wireless antenna 120 (and associated transceiving equipment).

Although the following is described with reference to an off-board monitoring system, it is understood that the system 116 and/or one or more of the modules 130, 132, 134 may be disposed onboard the vehicle system 100. In such embodiments, the vehicle system 100 may calculate tribology characteristics and determine an effectiveness of the friction modifier.

Returning to Figure 1, the system 116 may include a receiver 130 that is configured to receive creep measurements and tractive/braking measurements from one or more vehicle systems that were obtained as the one or more vehicle systems moved through the route segment B. The creep measurements and the tractive/braking measurements that were acquired may be associated with different locations along the route segment B. The receiver 130 may include or be operably coupled to the wireless antenna 118. The receiver 130 may also include other electronic devices or components for receiving data. The receiver 130 may receive data wirelessly and/or through hard wires, such as telecommunication lines. The receiver 130 may be configured to process the signals that represent the creep measurements and the tractive/braking measurements in order to render the measurements more suitable for analysis.

The system 116 also includes a calculation module 132 that is configured to calculate tribology characteristics of the track 102. In particular, the calculation module 132 may calculate tribology characteristics of the route segment B at the different locations along the route segment B. The tribology characteristics may be based on the creep measurements and the tractive/braking measurements that were acquired from the one or more vehicle systems. A tribology characteristic that corresponds to a designated location along the track 102 may be based on or determined by the friction that exists between the surfaces of the wheel and the surfaces of the rails at the designated location. The tribology characteristics calculated herein may provide some information as to the amount of friction that exists between the surfaces.

The system 116 may also include an analysis module 134 that is configured to determine an effectiveness of the friction modifier applied to the route segment B. The effectiveness may be based on the calculated tribology characteristics at the different locations along the route segment B. The different locations may be a series of locations (e.g., successive locations). The effectiveness is based on the tribology characteristics (e.g., COFs, adhesion coefficients, or other friction metrics) of the route segment B that were calculated by the calculation module 132. In some embodiments, the analysis module 134 may compare the tribology characteristics at the different locations to expected tribology characteristics of the different locations. For example, a railroad may expect that the adhesion coefficients at different locations will not exceed certain values. Moreover, if the friction modifier was improperly applied, was spread by vehicle systems, was exposed to harsh environmental conditions, and the like, the adhesion coefficients may be affected.

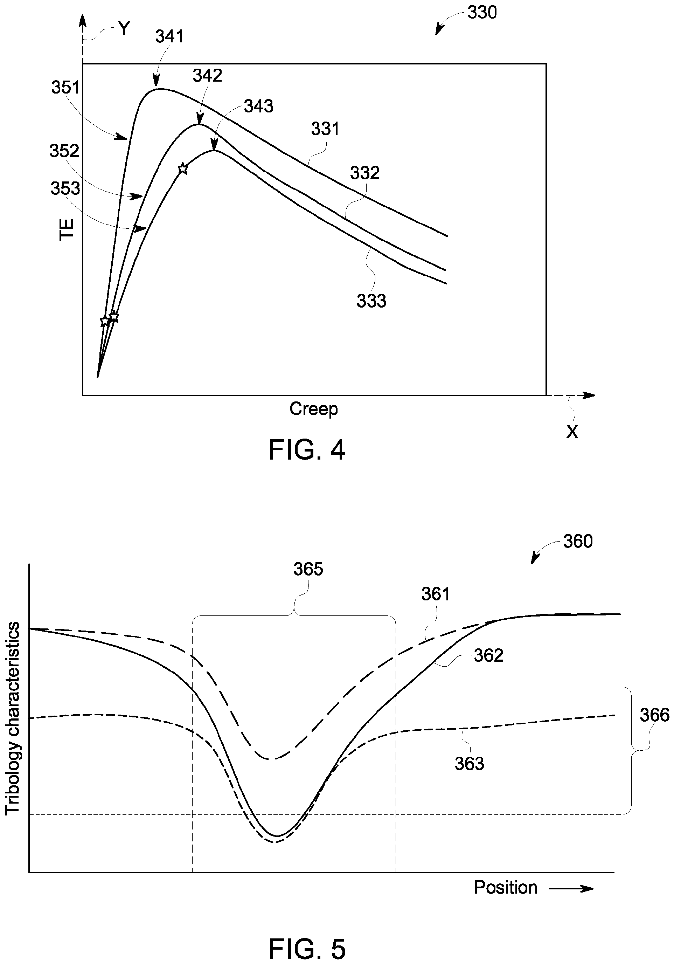

In some embodiments, the analysis module 134 may calculate a spread or distribution function of the friction modifier. The spread function may represent a relationship between track location and tribology characteristic value. For example, the tribology characteristic may be an adhesion coefficient value. One example of a range of adhesion coefficient values may be about 0.20 to about 0.60. Figure 5 illustrates three different spread functions. From the spread function, one or more portions of the route segment that has an improper amount of friction modifier (e.g., too much or too little) can be identified. More specifically, the spread function may indicate one or more portions of the route segment that have an insufficient amount or an excessive amount of the friction modifier. In some embodiments, the analysis module 134 is configured to identify one or more regions of the route segment having an amount of the friction modifier that is below a first designated threshold (e.g., desired minimum or baseline amount of the friction modifier) and/or one or more regions above a second designated threshold (e.g., a desired maximum or limit amount of the friction modifier). In between the first and second designated thresholds may be a designated range for an amount of the friction modifier. The designated range may be configured (e.g., by a railroad) to (a) reduce wearing of the rails and wearing of the wheels of the locomotives and/or (b) to obtain a desired adhesion between the rails and the wheels.

In some embodiments, the analysis module 134 may use compensating data that relates to effectiveness of the friction modifier. More specifically, the values of the tribology characteristics may be determined or modified, in part, by various compensating factors. Compensating data may include, for example, a weight or load of the propulsion-generating vehicle or the vehicle system, speed of the vehicle system, environmental data (such as weather conditions, e.g., rain, snow, temperature), and/or external rail conditions, such as leaves or other debris on the route. Various formulas may be used by the calculation and analysis modules to determine the effectiveness of the friction modifier.

By way of one example, a number of vehicle systems may travel along a designated track segment in a single day. Over an extended period of time (e.g., days, weeks, months) weather conditions may change such that precipitation (e.g., ice, snow) develops on the surfaces of the track segment or debris (e.g., leaves, mud) is somehow provided on the surfaces of the track segments. For days with increased precipitation or increased debris, the tribology characteristics calculated by each of the vehicle systems that travel along the track segment may be less than the values of the tribology characteristics calculated by the vehicle systems that travel along the track segment when precipitation and debris are not present (e.g., warm days without rain or wind). Thus, when determining effectiveness of a friction modifier, embodiments may compensate or account for such changing weather conditions.

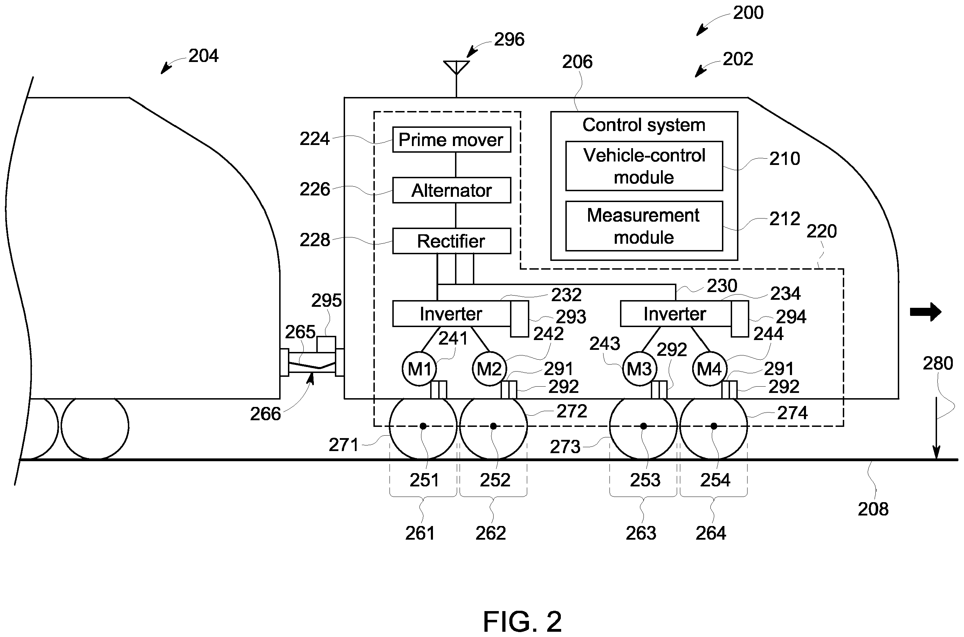

Figure 2 is a schematic diagram of a rail vehicle system 200 that includes a plurality of propulsion-generating vehicles 202, 204. The rail vehicle system 200 may be similar or identical to the vehicle system 100 (Figure 1). The propulsion-generating vehicles 202, 204 may constitute or be part of a vehicle consist that may or may not be coupled with other vehicle consist(s) (not shown) in the rail vehicle system 200. In Figure 2, the propulsion-generating vehicle 202 is a principal or lead propulsion-generating vehicle and the propulsion-generating vehicle 204 is a remote propulsion-generating vehicle that is controlled by the propulsion-generating vehicle 202. To this end, the propulsion-generating vehicle 202 includes a control system 206 that is configured to control operation of the propulsion-generating vehicle 202 and, optionally, propulsion-generating vehicle 204. In other embodiments, the propulsion-generating vehicle 204 may be the principal vehicle and may include a control system that is configured to control operation of the propulsion-generating vehicle 202. Alternatively, the control system 206 may be distributed between the propulsion-generating vehicles 202, 204. For embodiments that include multiple vehicle consists, the control system 206 may be configured to control operation of other vehicle consists.

The control system 206 may have a plurality of modules including a vehicle-control module 210 and a measurement module 212. The control system 206 and the modules 210 and 212 are configured to communicate signals to and receive signals from different components, assemblies, and sub-systems for controlling operation of the rail vehicle system 200. The control system 206 may be or include one or more controllers, processors, or other logic-based devices that perform operations based on one or more sets of instructions (e.g., software). In some cases, the different modules of the control system 206 are part of the same logic-based device or, alternatively, are distributed within multiple logic-based devices. The instructions on which the control system 206 operates may be stored on a tangible and non-transitory (e.g., not a transient signal) computer readable storage medium, such as a memory. The memory may include one or more computer hard drives, flash drives, RAM, ROM, EEPROM, and the like. Alternatively, one or more of the sets of instructions that direct operations of the control system 206 may be hard-wired into the logic of the control system 206, such as by being hard-wired logic formed in the hardware of the control system 206.

The vehicle-control and measurement modules 210, 212 are shown as being included in or as being part of a common structure of the control system 206. The modules 210, 212, however, are not required to be part of the same structure and may instead be separated from other portions of the control system 206 and/or each other. In some embodiments, one or more of the modules may be located off-board the propulsion-generating vehicle 202.

The vehicle-control module 210 is configured to control tractive and/or braking operations of the propulsion-generating vehicle 202. To this end, the vehicle-control module 210 is configured to communicate with a propulsion system 220 and a braking system (not shown). The vehicle-control module 210 may instruct (e.g., communicate signals to one or more components of the propulsion system 220) to increase or decrease power, tractive effort, etc. For example, the instructions may be in accordance with one or more operating plans that designate tractive operations (e.g., notch or throttle settings) and braking operations to be implemented by the rail vehicle system 200. The operating plan may include instructions for controlling tractive and/or braking efforts of a vehicle system for only a portion of the route or for the entire route. The instructions may be expressed as a function of time and/or distance of a trip along the track. In an embodiment, the vehicle-control module 210 may autonomously control operations of the propulsion-generating vehicle 202 according to the operating plan.

The propulsion system 220 can include a variable speed prime mover or engine 224 that is mechanically coupled to a rotor of a dynamo electric machine. In the illustrated embodiment, the dynamo electric machine is an alternator 226 and, in particular, a 3-phase alternating current (AC) synchronous alternator. The 3-phase voltages generated by the alternator 226 are supplied to input terminals of a power rectifier bridge 228. The rectifier bridge 228 may transform or modify the AC power from the alternator 226 into direct current (DC) power. The power rectifier bridge 228 has output terminals that supply the DC power to a DC link or bus 230. Although the propulsion system 220 is described as being an AC-type propulsion system that is powered by diesel, it is understood that embodiments set forth herein may also be implemented with DC-type propulsion systems and/or propulsion systems that are at least partially powered by electricity (e.g., batteries, catenary system, and the like).

As shown, the DC link 230 is electrically connected to inverters 232, 234. The inverters 232, 234 are configured to convert (e.g., invert) the DC power into AC power at a designated frequency for powering traction motors 241-244. The inverters 232, 234 may employ high power gate turn-off devices which switch in and out of conduction in response to gating signals from the control system 206 (or the vehicle-control module 210) so as to invert the DC voltage on the DC link 230 to a controlled frequency AC voltage.

Although not shown, the DC link 230 may also be electrically coupled to other components, such as a conditioning device and/or an auxiliary sub-system. The conditioning device may be configured to filter out unwanted frequencies and/or regulate the current of the DC link 230. The auxiliary sub-system may be operably coupled to one or more non-tractive components (e.g., compressors, fans or blowers, onboard air conditioners, radiators).

The motors 241, 242 are electrically connected to and powered by the inverter 232, and the motors 243, 244 are electrically connected to and powered by the inverter 234. The motors 241, 242 are electrically parallel to each other, and the motors 243, 244 are electrically parallel to each other. In some embodiments, the motors 241-244 are adjustable speed AC traction motors. Also shown, the motors 241-244 are operably coupled to axles 251-254, respectively, that are each coupled to wheels 271-274. The motors 241-244, the axles 251-254, and the wheels 271-274 may constitute respective axle wheelsets 261-264. For example, the motor 241, the axle 251, and a pair of wheels 271 may constitute the wheelset 261, which is configured to generate a TE for propelling the propulsion-generating vehicle 202 and, hence, the rail vehicle system 200. Each of the axle wheelsets 261-264 may be selectively controlled by the vehicle-control module 210 and the control system 206 to provide a designated TE (e.g., axle TE). More specifically, the axle wheelsets 261-264 of the propulsion-generating vehicle 202 may be selectively controlled to provide different axle TEs.

Although not shown, the propulsion-generating vehicle 204 may have a similar or identical propulsion system as the propulsion system 220. In some embodiments, the propulsion system of the propulsion-generating vehicle 204 (not shown) may be controlled by the control system 206. The propulsion-generating vehicles 202, 204 may be communicatively coupled to each other through a communication cable 265. The cable 265 may include, for example, an Ethernet over multiple units (eMU) cable. The cable 265 may enable the propulsion-generating vehicles 202, 204 to communicate with each other regarding various operations of the rail vehicle system 200. It is noted, however, that embodiments may utilize other methods of communicating, such as other wired systems, wired distributed power (DP) links, wireless communication (e.g., radio communication), and the like.

In the illustrated embodiment, the propulsion-generating vehicles 202, 204 are adjacent to each other and directly connected by a mechanical coupler 266. The mechanical coupler 266 may allow some tolerance or slack such that the propulsion-generating vehicles 202, 204 are permitted to move a limited distance toward each other or away from each other. In alternative embodiments, the propulsion-generating vehicles 202, 204 are not adjacent to each other. Instead, the propulsion-generating vehicles 202, 204 may be indirectly coupled to one another via other vehicles, which may be propulsion-generating or non-powered vehicles. For example, the propulsion-generating vehicle 202 may lead the rail vehicle system 200 as shown in Figure 2 and the propulsion-generating vehicle 204 may be located at a position that is about 2/3 a length of the rail vehicle system 200 away from the propulsion-generating vehicle 204.

The propulsion-generating vehicles 202, 204 of Figure 2 are only particular examples of locomotives that may be used with embodiments set forth herein. It is understand that various modifications may be made to the rail vehicle system 200 and that other types of locomotives may be used. For example, it may be desirable to provide an inverter for each motor or to couple additional motors to a single inverter. As such, it is understood that the inventive subject matter described herein is not limited to 4-axle systems and is equally applicable to other systems, for example, such as 6-axle locomotives with six inverters each connected for powering a respective one of six traction motors each connected to respective ones of the six axles.

The rail vehicle system 200 travels along a route 208, such as a track having one or more rails. Each of the propulsion-generating vehicles 202, 204 facilitates driving the rail vehicle system 200 using the wheelsets of the respective vehicle. For example, the traction motors 241-244 deliver torque to the wheels 271-274, which exert tangential force (e.g., tractive effort) along the route 208, thereby propelling the rail vehicle system 200 along the route 208. The TE developed at each wheel of the propulsion-generating vehicle 202 is proportional to a normal force 280 acting on the respective wheel. The axle TE of a single axle wheelset is approximately equal to the friction coefficient multiplied by the normal force 280 acting on the respective wheelset. The total TE provided by the propulsion-generating vehicle 202 is the sum of each of the axle TEs.

For a dynamic braking mode, the traction motors 241-244 are reconfigured (via power switching devices (not shown)) so that the traction motors 241-244 operate as generators. So configured, the traction motors 241-244 generate electric energy which has the effect of slowing the propulsion-generating vehicle 202. In some cases, energy generated in a dynamic braking mode may be transferred to resistance grids (not shown) that are coupled to the propulsion-generating vehicle 202. The dynamic braking energy may be converted to heat and dissipated from the propulsion-generating vehicle 202 through the grids. In other embodiments, the dynamic braking energy may be stored (e.g., batteries) by the propulsion-generating vehicle 202.

Also shown in Figure 2, the rail vehicle system 200 may include a number of detection devices 291-295. The detection devices 293, 294 of the control system 206 may be incorporated with the inverters 232, 234, respectively, but the detection devices 293, 294 may have other locations in other embodiments. Alternatively, each of the motors 241-244 may include a respective detection device. The detection devices 293, 294 are configured to monitor one or more operating conditions that have a direct relation to TE, BE, and/or creep. More specifically, data obtained regarding the operating conditions may be used to calculate at least one of a creep measurement, a tractive measurement, or a braking measurement. In some embodiments, the detection devices 293, 294 are configured to detect a motor characteristic, such as motor current, motor RPMs, motor torque, and motor power. The data can be communicated to the measurement module 212.

The detection devices 291, 292 may obtain data from the wheelsets 261-264 that have a direct relation to TE, BE, and/or creep. Such data may be used to calculate at least one of the creep measurement, the tractive measurement, or the braking measurement described herein. For example, the detection devices 291, 292 may be configured to detect at least one of rotation speed, torque, torsional vibrations, vehicle speed (e.g., ground speed), wheel strain, axle strain, dog-bone strain, or motor speed. The data can be communicated to the measurement module 212.

In the illustrated embodiment, the detection devices 291, 292 are rotation-speed and vehicle-speed sensors, respectively. The detection devices 291 may communicate data (e.g., in the form of signals) that is representative of a rotational speed of a corresponding wheelset. For example, the detection devices 291 may measure how fast a wheel, axle, or motor shaft of the corresponding wheelset is rotating. In particular embodiments, the detection devices 291 detect a voltage or current signal of the electrical power supplied to the respective motor that is representative of the wheel speed. The detection devices 292 communicate data that is representative of how fast the propulsion-generating vehicle 202 is moving along the route 208. By way of example, the detection devices 292 may include a radar system (e.g., Doppler radar gun or other type of radar system) or a Global Positioning System (GPS) system that is used to obtain the data representative of the speed at which the propulsion-generating vehicle 202 moves along the route 208. Other vehicle speed sensors may be used as well. The data representative of the wheel speed and the vehicle speed can be communicated to the measurement module 212.

As another example, the detection devices 291-294 may monitor or obtain data relating to wheel creep to improve or optimize the wheel creep during operation of the rail vehicle system 200. More specifically, a designated tractive effort or braking effort may be obtained if each of the wheelsets 261-264 of the propulsion-generating vehicle 202 is rotating at such an angular velocity that its actual peripheral speed (e.g., wheel speed) is slightly higher (in case of motoring) or slightly lower (in case of braking) than the actual speed of the vehicle. The difference between the linear speed at which the vehicle is traveling (referred to as vehicle speed) and the wheel speed is referred to as wheel creep.

There is usually a relatively low limit on the value of wheel creep at which peak tractive effort or braking effort is realized.

This value, commonly known as optimum creep, is a variable that depends on the vehicle speed and the surface conditions of the rail vehicle system 200 and the route 208. The optimum creep correlates to a peak value of an applicable wheel-rail adhesion-creep curve. Operation of any or all wheelsets away from the optimum creep, such as too large of a creep value, may cause a reduction or loss of wheel-to-surface adhesion. If the wheel-to-surface adhesion is reduced or lost, some or all the vehicle wheels may slip excessively. This is often undesirable as slippage can cause accelerated wheel wear, rail damage, high mechanical stresses in the drive components of the propulsion system, and an undesirable decrease of tractive (or braking) effort.

The detection device 295 may be operably connected to the mechanical coupler 266 and configured to detect stresses or forces sustained at the mechanical coupler 266. In some embodiments, the data obtained by the detection device 295 may be used to calculate the measurements used to determine the tribology characteristics.

The measurement module 212 is configured to obtain data relating to the creep measurements and tractive/braking measurements of the rail vehicle system 200. The data may be acquired at different locations along a route segment as the vehicle system moves through the route segment. The data that may be used to calculate the creep measurements and/or the tractive/braking measurements is communicated to the measurement module 212 from the detection devices 291-295. In some embodiments, the measurement module 212 calculates the measurements that are transmitted from the rail vehicle system 200 to the system 116. In other embodiments, the measurements are calculated by the detection devices 291-295.

In some embodiments, the measurement module 212 may analyze the measurements and/or data to determine that the data is sufficient or trustworthy. The measurement module 212 may package the measurement or data in predetermined format so that a monitoring system (e.g., system 116) may recognize the measurements. The measurement module 212 may execute preliminary processing steps. For example, the measurement module 212 may obtain data from the detection devices 291-295 and calculate the measurements that will be used to determine the effectiveness of the friction modifier. More specifically, the measurement module 212 may calculate one or more creep measurements based on the data obtained by one or more of the detection devices 291-295. The measurement module 212 may also calculate one or more tractive measurements or one or more braking measurements based on the data obtained by one or more of the detection devices 291-295.

In some embodiments, the measurement module 212 may communicate the measurements or data relating to the measurements to a transmitter 296. The transmitter 296 is configured to communicate the creep measurements and the tractive/braking measurements from the rail vehicle system 200 to, for example, the system 116. In other embodiments, the rail vehicle system 200 may calculate the tribology characteristics from the measurements and determine an effectiveness of the friction modifier. For example, the rail vehicle system 200 may have a calculation module and an analysis module that is similar or identical to the calculation and analysis modules 132, 134.

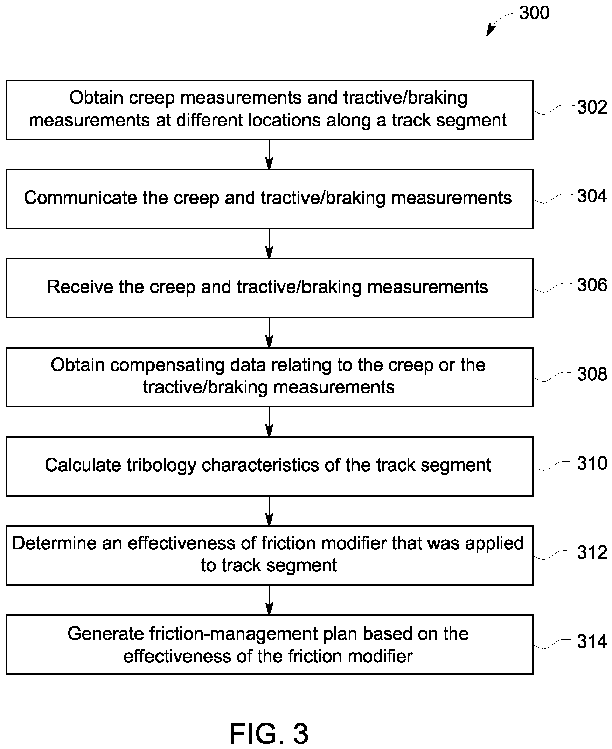

Figure 3 is a flow chart illustrating a method 300 in accordance with an embodiment. The method 300, for example, may employ structures or aspects of various embodiments (e.g., systems and/or methods) discussed herein. In various embodiments, certain steps (or operations) may be omitted or added, certain steps may be combined, certain steps may be performed simultaneously, certain steps may be performed concurrently, certain steps may be split into multiple steps, certain steps may be performed in a different order, or certain steps or series of steps may be re-performed in an iterative fashion. The method 300 (or certain steps thereof) may be implemented by one or more algorithms that are executed by logic-based devices to control hardware (e.g., propulsion system, measurement module, analysis module) to perform designated operations as described herein.

The method 300 may include obtaining (at 302) creep measurements and tractive/braking measurements at different locations along a route segment. The creep measurements and the tractive/braking measurements may be measurements as described above. The creep measurements and the tractive/braking measurements or the data that is used to calculate the creep measurements and the tractive/braking measurements may be obtained during a tractive operation (e.g., while the vehicle system or propulsion-generating vehicle is motoring), during a braking operation, or when the vehicle system or propulsion-generating vehicle is idling (e.g., coasting).

In some embodiments, obtaining (at 302) includes only obtaining measurements of a single vehicle system. In other embodiments, obtaining (at 302) includes obtaining measurements from a plurality of vehicle systems. For example, each vehicle system that traverses the route segment and is capable of obtaining the creep and tractive/braking measurements may communicate the measurements to, for example, an offboard monitoring system.

Obtaining (at 302) may include obtaining measurements continuously, at a periodic rate, or at an aperiodic rate. For example, an aperiodic rate may include obtaining fewer measurements when the vehicle system is outside of the region-of-interest (e.g., in the leading or trailing baseline portions of the route segment). An aperiodic rate may include obtaining incrementally more and more measurements as the rail vehicle system approaches (e.g., becomes nearer to) the region-of-interest. In some embodiments, measurements may be continuously obtained when the vehicle system is within the region-of-interest. In other embodiments, measurements may be continuously obtained when the vehicle system is within the region-of-interest and outside the region-of-interest along the route segment.

In some embodiments, the route segment is at least a kilometer (or equivalent in miles) or at least two kilometers (or equivalent in miles). In some embodiments, the route segment is at least one mile (or equivalent in kilometers) or at least two miles (or equivalent in kilometers). In some embodiments, the creep measurements and the tractive/breaking measurements are obtained, on average, at least once every 100 meters, at least once every 50 meters, or, more specifically, at least once every 10 meters along the route segment. In some embodiments, a total number of measurements obtained and used by the analysis module is at least 100 measurements or, more specifically, at least 1000 measurements. The 100 or 1000 measurements may be from a single vehicle system or from multiple vehicle systems.

In some embodiments, obtaining (at 302) includes instructing the propulsion system of the propulsion-generating vehicle to operate in a designated manner. For example, if the propulsion-generating vehicle includes multiple wheelsets, obtaining (at 302) may include increasing the tractive effort of a first wheelset by a designated amount and decreasing the tractive effort of a second wheelset by the designated amount thereby maintaining a total tractive effort of the corresponding vehicle system. By increasing the tractive effort of the first wheelset, a clearer measurement of the tribology characteristic may be acquired. More specifically, increasing the tractive effort may induce greater slippage (e.g., a greater creep measurement) at the first wheelset that may correspond to a higher confidence in the tribology characteristic. Furthermore, by not changing the total tractive effort of the vehicle system, the measurements can be obtained automatically without substantially disrupting or deviating from the operating plan or from the operator's instructions.

Alternatively or additionally, obtaining (at 302) may include operating the corresponding vehicle system at a designated throttle setting. In some instances, the throttle setting may correspond to a maximum tractive effort. When a maximum tractive effort is sought by the vehicle system, the vehicle system may continue to increase tractive effort until the optimum creep point is determined. More specifically, the tractive/braking measurements that are obtained when the throttle setting requires a maximum tractive effort may be representative of the optimum creep point. The optimum creep point may be used to determine the tribology characteristic.

In other embodiments, obtaining (at 302) may include operating the corresponding vehicle system at a designated throttle setting in which the throttle setting requires less than maximum tractive efforts. Nonetheless, creep measurements may be obtained and associated with the applied tractive effort (or braking effort). Such instances may be particularly suitable when an initial slope of a traction-creep curve is being formed.

Accordingly, creep measurements may be acquired at any time when tractive efforts are being provided or when braking efforts are being supplied. In addition, creep measurements may be acquired when the propulsion-generating vehicle is moving but with the engine effectively idling. As described above, different wheelsets may provide different efforts such that the total change in effort (braking effort or tractive effort) is substantially zero. When the efforts of a single wheelset are changed, creep measurements may be acquired. Thus, numerous data points may be obtained that may be used to acquire information of the friction modifier. For example, the data points may be used to form a traction-creep curve.

Figure 4 provides a graph 330 that include traction-creep curves 331-333. Each of the traction-creep curves 331-333 represents a tractive effort versus creep relationship that is based on data points acquired at different locations along the same route segment. The y-axis corresponds to increasing tractive effort, and the x-axis corresponds to increasing creep. It should be noted that similar curves (or relationships) may be shown for other tractive/horsepower characteristics and creep. For example, under some circumstances, an adhesion coefficient may exhibit a similar relationship with creep. As shown, each curve exhibits a slightly different relationship between tractive effort and creep. This may be due to the amount of friction modifier at the location of the route segment. Each of the curves 331-333 has an optimum creep 341-343, respectively, and has a traction-creep slope 351-353, respectively. The optimum creeps 341-343 and/or the traction-creep slopes 351-353 may be used to calculate a tribology characteristic.

Returning to Figure 3, the method 300 may also include communicating (at 304) the creep and tractive/braking measurements and receiving (at 306) the creep and tractive/braking measurements. The measurements may be received by a system (e.g., monitoring system, such as the system 116). In other embodiments, the measurements may not be communicated externally and, instead, may be communicated to an onboard system that is configured to calculate tribology characteristics and, optionally, determine an effectiveness of a friction modifier based on the tribology characteristics.

The method 300 also includes obtaining (at 308) compensating data that relates to or may have an effect on the creep or tractive/braking measurements. The tribology characteristics may be a function of various changing factors. For example, the tribology characteristics may be based on weight of the propulsion-generating vehicle or the vehicle system, speed of the vehicle system, and predetermined limits of the vehicle system. Such compensating data may be communicated by the vehicle system to the monitoring system. Other compensating data may include environmental data, such as weather conditions (e.g., rain, snow, temperature) and external rail conditions, such as leaves on the track.

The method 300 also includes calculating (at 310) tribology characteristics of the route segment at different locations. In particular embodiments, the tribology characteristic is indicative of or based on a COF at the track location or an adhesion coefficient at the track location. As described herein, COFs and adhesion coefficients may be directly affected by the application of friction modifiers. Various formulas may be used to calculate the tribology characteristics.

The method 300 may also include determining (at 312) an effectiveness of the friction modifier that was applied to the route segment (e.g., the region-of-interest in the route segment). Determining (at 312) may include determining a function (e.g., graph or relationship curve or formula) that indicates tribology characteristics as a function of location. Figure 5 shows a graph 360 including three separate curves 361-363 illustrating such relationships between tribology characteristics and location. The friction modifier applied in this instance was lubrication configured to reduce adhesion. A region-of-interest 365 along the track is indicated, and a suitable range 366 of the tribology characteristic (e.g., adhesion coefficient) is shown for the region-of-interest 365. More specifically, it is desired that the tribology characteristics be within the suitable range 366 for the entire region-of-interest 365. As shown, the curve 361 corresponds to the route segment in which an insufficient or inadequate amount of lubrication exists for portions of the region-of-interest 365. More specifically, the tribology characteristics are relatively high and not within the suitable range 366 for portions of the region-of-interest 365. The curve 363 corresponds to the route segment in which an excessive amount of lubrication exists. As shown, the tribology characteristics are relatively low and never exceed the suitable range 366 even outside of the region-of-interest 365. More specifically, the lubrication has spread beyond the region-of-interest and may be preventing vehicle systems from obtaining a maximum tractive effort. The curve 362 corresponds to the route segment having a suitable amount of lubrication.

In some embodiments, determining (at 312) the effectiveness of the friction modifier may include identifying one or more portions of the route segment that have an inadequate amount of friction modifier or have an excessive amount of friction modifier. For example, the tribology characteristics for the different portions of the route segments may be compared to a first designated threshold (e.g., desired minimum or baseline amount) and/or to a second designated threshold (e.g., a desired maximum or limit amount). In some embodiments, determining (at 312) the effectiveness of the friction modifier may include comparing the tribology characteristics to expected tribology characteristics. For example, either of curves 361 and 363 may be compared to the curve 362.

The method may also include generating (at 314) a friction-management plan based on the effectiveness of the friction modifier. The friction-management plan may include instructions for applying friction modifier to the route segment. The friction modifier may be applied by passenger or freight vehicle systems, such as those that obtain the measurements, or by systems or devices that are specifically configured to apply the friction modifier. The instructions in the friction-management plan may include increasing an amount of the friction modifier at designated points along the route segment and/or decreasing an amount of the friction modifier at designated points along the track. Increasing may be accomplished by more frequent applications and/or more friction modifier being applied at each application. Decreasing may be accomplished by fewer applications and/or less friction modifier being applied at each application. The friction-management plan may also recommend using a different friction modifier.

As used herein, the terms "system" and "module" include a hardware and/or software system that operates to perform one or more functions. For example, a module or system may include a computer processor, controller, or other logic-based device that performs operations based on instructions stored on a tangible and non-transitory computer readable storage medium, such as a computer memory. Alternatively, a module or system may include a hard-wired device that performs operations based on hard-wired logic of the device. The modules shown in the attached figures may represent the hardware that operates based on software or hardwired instructions, the software that directs hardware to perform the operations, or a combination thereof.

As used herein, an element or step recited in the singular and proceeded with the word "a" or "an" should be understood as not excluding plural of said elements or steps, unless such exclusion is explicitly stated. Furthermore, references to "one embodiment" or "an embodiment" of the presently described inventive subject matter are not intended to be interpreted as excluding the existence of additional embodiments that also incorporate the recited features. Moreover, unless explicitly stated to the contrary, embodiments "comprising," "comprises," "including," "includes," "having," or "has" an element or a plurality of elements having a particular property may include additional such elements not having that property.

In an embodiment, a method is provided that includes obtaining creep measurements and tractive/braking measurements from at least one vehicle system at different locations along a route segment while the at least one vehicle system moves through the route segment. The method also includes calculating tribology characteristics of the route segment at the different locations. The tribology characteristics are based on the creep measurements and the tractive/braking measurements from the at least one vehicle system. The tribology characteristics are indicative of a friction coefficient of the route segment at the different locations. The method also includes determining an effectiveness of a friction modifier applied to the route segment based on the tribology characteristics.

In one aspect, obtaining the creep measurements and the tractive/breaking measurements may include obtaining a series of the creep measurements and the tractive/breaking measurements throughout the route segment from each of the vehicle systems. Optionally, the route segment may be at least a half-kilometer long or at least one kilometer long or, more particularly, at least two kilometers long. Optionally, the creep measurements and the tractive/breaking measurements may be obtained, on average, at least once every 100 meters of the route segment. In some embodiments, the creep measurements and the tractive/breaking measurements may be obtained, on average, at least once every 50 meters of the route segment. In more particular embodiments, the creep measurements and the tractive/breaking measurements may be obtained, on average, at least once every 10 meters of the route segment.

In another aspect, obtaining the creep measurements and the tractive/braking measurements from the at least one vehicle system includes obtaining the creep measurements and the tractive/braking measurements in response to a tractive effort of a first wheelset being increased by a designated amount and a tractive effort of a second wheelset being decreased by the designated amount thereby maintaining a total tractive effort of the at least one vehicle system.

In another aspect, obtaining the creep measurements and the tractive/braking measurements from the at least one vehicle system includes the tractive/braking measurements being representative of maximum tractive efforts at the different locations.

In another aspect, the at least one vehicle system operates in accordance with an operating plan. The operating plan includes predetermined instructions for one or more propulsion-generating vehicles of the at least one vehicle system to provide at least one of a designated tractive effort or a designated braking effort.

In another aspect, the at least one vehicle system includes at least one locomotive in which a plurality of the creep measurements and a plurality of the tractive/braking measurements are obtained from the at least one locomotive.

In another aspect, the method also includes obtaining creep measurements and tractive/braking measurements from at least one other separate vehicle system while the at least one other separate vehicle system moves through the route segment. Calculating the tribology characteristic of the route segment includes using the creep measurements and the tractive/braking measurements from the at least one other separate vehicle system.

In another aspect, obtaining the creep measurements and the tractive/braking measurements includes obtaining the creep measurements and the tractive/braking measurements at an off-board (e.g., remotely located site) monitoring system. The at least one vehicle system may be a plurality of separate vehicle systems that travel along the route segment.

In another aspect, the tribology characteristic is an adhesion coefficient or is based on or indicative of the adhesion coefficient.

In another embodiment, a system (e.g., monitoring system) is provided that includes a receiver configured to receive creep measurements and tractive/braking measurements from at least one vehicle system at different locations along a route segment while the at least one vehicle system moves through the route segment. The system also includes a calculation module configured to calculate tribology characteristics of the route segment at the different locations. The tribology characteristics are based on the creep measurements and the tractive/braking measurements from the at least one vehicle system. The tribology characteristics are indicative of a friction coefficient of the route segment at the different locations. The system also includes an analysis module configured to determine an effectiveness of a friction modifier applied to the route segment based on the tribology characteristics at the different locations.

In one aspect, the analysis module is configured to compare the tribology characteristics at the different locations to expected tribology characteristics at the different locations.

In another aspect, the analysis module is configured to identify one or more regions of the route segment that having an amount of the friction modifier that is below a first designated threshold and identify one or more regions of the route segment having an amount of the friction modifier that is above a second designated threshold.

In another aspect, the receiver is configured to receive compensating data relating to route conditions and the analysis module is configured to determine the effectiveness of the friction modifier using the compensating data to compensate for the route conditions.

In another aspect, the receiver is configured to receive a series of the creep measurements and the tractive/breaking measurements throughout the route segment from the at least one vehicle system.

In another aspect, the route segment is at least two kilometers long and wherein the creep measurements and the tractive/breaking measurements are obtained, on average, at least once every 50 meters for the route segment.

In another aspect, a system (e.g., control system of a vehicle system) is provided that includes a vehicle-control module configured to control tractive and braking operations of a vehicle system. The system also includes a measurement module configured to obtain creep measurements and tractive/braking measurements of the vehicle system at different locations along a route segment while the vehicle system moves through the route segment. The system also includes a transmitter configured to communicate the creep measurements and the tractive/braking measurements from the vehicle system. The vehicle-control module is configured to increase the tractive effort of a first wheelset by a designated amount and decrease the tractive effort of a second wheelset by the designated amount thereby maintaining a total tractive effort of the vehicle system. The measurement module is configured to obtain the creep measurements and the tractive/braking measurements when the first and second wheelsets operate at increased and decreased tractive efforts, respectively.

In one aspect, the measurement module is configured to obtain the creep measurements and the tractive/braking measurements of the vehicle system when the vehicle system is operating at a designated throttle setting. The tractive/braking measurements may be representative of maximum tractive efforts at the different locations.

In another aspect, the vehicle-control module is configured to control the vehicle system in accordance with an operating plan. The operating plan includes predetermined instructions for one or more propulsion-generating vehicles of the vehicle system to provide at least one of a designated tractive effort or a designated braking effort.

In another aspect, the vehicle system includes a locomotive.

In another aspect, the vehicle system includes a plurality of locomotives. The calculation module is configured to obtain the creep measurements and the tractive/braking measurements from the plurality of locomotives.

In another aspect, the vehicle system includes a train that transports at least one of freight or passengers.

In another aspect, at least some of the vehicle systems may include plural locomotives. Each of the locomotives may obtain a plurality of the creep measurements and a plurality of the tractive/braking measurements.

In another aspect, the vehicle systems may include trains that transport at least one of freight or passengers.

In an embodiment, a system is provided that includes a receiver configured to receive creep measurements and tractive/braking measurements from multiple vehicle systems at different locations along a route segment while the vehicle systems move through the route segment. The system may also include a calculation module that is configured to calculate a tribology characteristic of the route segment at the different locations. The tribology characteristic is based on the creep measurements and the tractive/braking measurements from the vehicle systems, wherein the tribology characteristic is indicative of a friction coefficient of the route segment at the respective location. The system may also include an analysis module that is configured to determine an effectiveness of a friction modifier applied to the route segment based on the tribology characteristic.

In another aspect, the route segment is at least a half-kilometer long or at least one kilometer long or, more particularly, at least two kilometers long. Optionally, a number of the creep measurements and the tractive/breaking measurements may correlate to, on average, at least once every 100 meters of the route segment, at least once every 50 meters of the route segment, or at least once every 10 meters of the route segment.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the inventive subject matter without departing from its scope. While the dimensions and types of materials described herein are intended to define the parameters of the inventive subject matter, they are by no means limiting and are exemplary embodiments. Many other embodiments will be apparent to one of ordinary skill in the art upon reviewing the above description. The scope of the inventive subject matter should, therefore, be determined with reference to the appended claims. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

This written description uses examples to disclose several embodiments of the inventive subject matter, and also to enable one of ordinary skill in the art to practice the embodiments of inventive subject matter, including making and using any devices or systems and performing any incorporated methods. The patentable scope of the inventive subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

The foregoing description of certain embodiments of the present inventive subject matter will be better understood when read in conjunction with the appended drawings. To the extent that the figures illustrate diagrams of the functional blocks of various embodiments, the functional blocks are not necessarily indicative of the division between hardware circuitry. Thus, for example, one or more of the functional blocks (for example, controllers or memories) may be implemented in a single piece of hardware (for example, a general purpose signal processor, microcontroller, random access memory, hard disk, and the like). Similarly, the programs may be stand-alone programs, may be incorporated as subroutines in an operating system, may be functions in an installed software package, and the like. The various embodiments are not limited to the arrangements and instrumentality shown in the drawings.

## Claims

1. A method comprising:
obtaining creep measurements and tractive/braking measurements from at least one rail vehicle system (100) at different locations along a route segment while the at least one rail vehicle system moves through the route segment;
calculating tribology characteristics of the route segment at the different locations, the tribology characteristics being based on the creep measurements and the tractive/braking measurements from the at least one rail vehicle system (100), wherein the tribology characteristics are indicative of a friction coefficient of the route segment at the different locations; and
determining an effectiveness of a friction modifier applied to the route segment based on the tribology characteristics.

2. The method of claim 1, wherein obtaining the creep measurements and the tractive/breaking measurements includes obtaining a series of the creep measurements and the tractive/breaking measurements throughout the route segment of the at least one vehicle system (100).

3. The method of claim 1 or claim 2, wherein the route segment is at least two kilometers long and wherein the creep measurements and the tractive/breaking measurements are obtained, on average, at least once every 50 meters for the route segment.

4. The method of any preceding claim, wherein obtaining the creep measurements and the tractive/braking measurements from the at least one vehicle system (100) includes obtaining the creep measurements and the tractive/braking measurements in response to a tractive effort of a first wheelset being increased by a designated amount and a tractive effort of a second wheelset being decreased by the designated amount thereby maintaining a total tractive effort of the at least one vehicle system (100).

5. The method of any preceding claim, wherein obtaining the creep measurements and the tractive/braking measurements from the at least one vehicle system (100) includes the tractive/braking measurements being representative of maximum tractive efforts at the different locations.

6. The method of any preceding claim, wherein the at least one vehicle system (100) operates in accordance with an operating plan, the operating plan including predetermined instructions for one or more propulsion-generating vehicles of the at least one vehicle system to provide at least one of a designated tractive effort or a designated braking effort.

7. The method of any preceding claim, wherein the at least one vehicle system (100) includes at least one locomotive and wherein a plurality of the creep measurements and a plurality of the tractive/braking measurements are obtained from the at least one locomotive.

8. The method of any preceding claim, further comprising obtaining creep measurements and tractive/braking measurements from at least one other separate vehicle system (100) while the at least one other separate vehicle system moves through the route segment, wherein calculating the tribology characteristics of the route segment includes using the creep measurements and the tractive/braking measurements from the at least one other separate vehicle system.

9. The method of any preceding claim, wherein obtaining the creep measurements and the tractive/braking measurements includes obtaining the creep measurements and the tractive/braking measurements at an off-board monitoring system, the at least one vehicle system (100) being a plurality of separate vehicle systems that travel along the route segment.

10. The method of any preceding claim, wherein the tribology characteristic is an adhesion coefficient or is based on or indicative of the adhesion coefficient.

11. A system comprising:
a receiver (130) configured to receive creep measurements and tractive/braking measurements from at least one rail vehicle system (100) at different locations along a route segment while the at least one rail vehicle system (100) moves through the route segment;
a calculation module (132) configured to calculate tribology characteristics of the route segment at the different locations, the tribology characteristics being based on the creep measurements and the tractive/braking measurements from the at least one rail vehicle system (100), wherein the tribology characteristics are indicative of a friction coefficient of the route segment at the different locations; and
an analysis module (134) configured to determine an effectiveness of a friction modifier applied to the route segment based on the tribology characteristics at the different locations.

12. The system of claim 11, wherein the analysis module (134) is configured to compare the tribology characteristics at the different locations to expected tribology characteristics at the different locations.

13. The system of claim 11 or claim 12, wherein the analysis module (134) is configured to identify one or more regions of the route segment having an amount of the friction modifier that is below a first designated threshold and identify one or more regions of the route segment having an amount of the friction modifier that is above a second designated threshold.

14. The system of any of claims 11 to 13, wherein the receiver (130) is configured to receive compensating data relating to route conditions and the analysis module is configured to determine the effectiveness of the friction modifier using the compensating data to compensate for the route conditions.

15. A system comprising:
a vehicle-control module including the system of any one of claims 11 to 14, the vehicle-control module being configured to control tractive and braking operations of a rail vehicle system;
a measurement module (212) configured to obtain creep measurements and tractive/braking measurements of the rail vehicle system at different locations along a route segment while the rail vehicle system moves through the route segment; and
a transmitter (118) configured to communicate the creep measurements and the tractive/braking measurements from the vehicle system;
wherein the vehicle-control module (210) is configured to increase the tractive effort of a first wheelset by a designated amount and decrease the tractive effort of a second wheelset by the designated amount thereby maintaining a total tractive effort of the rail vehicle system, the measurement module (212) configured to obtain the creep measurements and the tractive/braking measurements when the first and second wheelsets operate at increased and decreased tractive efforts, respectively.

## Patentansprüche

1. Verfahren, umfassend:
Erhalten von Kriechmessungen und Zug-/Bremsmessungen von zumindest einem Schienenfahrzeugsystem (100) an verschiedenen Stellen entlang eines Streckensegments, während sich das zumindest eine Schienenfahrzeugsystem durch das Streckensegment bewegt;
Berechnen von tribologischen Eigenschaften des Streckensegments an den verschiedenen Stellen, wobei die tribologischen Eigenschaften auf den Kriechmessungen und den Zug-/Bremsmessungen des zumindest einen Schienenfahrzeugsystems (100) basieren, wobei die tribologischen Eigenschaften einen Reibungskoeffizienten des Streckensegments an den verschiedenen Stellen anzeigen; und
Bestimmen einer Wirksamkeit eines auf das Streckensegment angewandten Reibungsmodifikators basierend auf den tribologischen Eigenschaften.

2. Verfahren nach Anspruch 1, wobei das Erhalten der Kriechmessungen und der Zug-/Bremsmessungen ein Erhalten einer Reihe der Kriechmessungen und der Zug-/Bremsmessungen über das gesamte Streckensegment des zumindest einen Fahrzeugsystems (100) aufweist.

3. Verfahren nach Anspruch 1 oder Anspruch 2, wobei das Streckensegment zumindest zwei Kilometer lang ist und wobei die Kriechmessungen und die Zug-/Bremsmessungen im Durchschnitt zumindest einmal alle 50 Meter für das Streckensegment erhalten werden.

4. Verfahren nach einem vorstehenden Anspruch, wobei das Erhalten der Kriechmessungen und der Zug-/Bremsmessungen von dem zumindest einen Fahrzeugsystem (100) ein Erhalten der Kriechmessungen und der Zug-/Bremsmessungen als Reaktion darauf aufweist, dass eine Zugkraft eines ersten Radsatzes um einen bestimmten Betrag erhöht wird und eine Zugkraft eines zweiten Radsatzes um einen bestimmten Betrag verringert wird, wodurch die Gesamtzugkraft des zumindest einen Fahrzeugsystems (100) aufrecht erhalten wird.

5. Verfahren nach einem vorstehenden Anspruch, wobei das Erhalten der Kriechmessungen und der Zug-/Bremsmessungen von dem zumindest einen Fahrzeugsystem (100) aufweist, dass die Zug-/Bremsmessungen für eine maximale Zugkraft an den verschiedenen Stellen repräsentativ sind.

6. Verfahren nach einem vorstehenden Anspruch, wobei das zumindest eine Fahrzeugsystem (100) in Übereinstimmung mit einem Betriebsplan arbeitet, wobei der Betriebsplan vorbestimmte Anweisungen für ein oder mehrere antriebserzeugende Fahrzeuge des zumindest einen Fahrzeugsystems aufweist, um zumindest eine von einer bestimmten Zugkraft oder einer bestimmte Bremskraft bereitzustellen.

7. Verfahren nach einem vorstehenden Anspruch, wobei das zumindest eine Fahrzeugsystem (100) zumindest eine Lokomotive aufweist und wobei eine Mehrzahl von Kriechmessungen und eine Mehrzahl von Zug-/Bremsmessungen von der zumindest einen Lokomotive erhalten werden.

8. Verfahren nach einem vorstehenden Anspruch, weiter umfassend Erhalten von Kriechmessungen und Zug-/Bremsmessungen von zumindest einem anderen separaten Fahrzeugsystem (100), während sich das zumindest eine andere separate Fahrzeugsystem durch das Streckensegment bewegt, wobei das Berechnen der tribologischen Eigenschaften des Streckensegments ein Verwenden der Kriechmessungen und der Zug-/Bremsmessungen von dem zumindest einen anderen separaten Fahrzeugsystem aufweist.

9. Verfahren nach einem vorstehenden Anspruch, wobei das Erhalten der Kriechmessungen und der Zug-/Bremsmessungen ein Erhalten der Kriechmessungen und der Zug-/Bremsmessungen an einem externen Überwachungssystem aufweist, wobei das zumindest eine Fahrzeugsystem (100) eine Mehrzahl von Fahrzeugsystemen ist, die entlang des Streckensegments fahren.

10. Verfahren nach einem vorstehenden Anspruch, wobei die tribologische Eigenschaft ein Adhäsionskoeffizient ist oder auf dem Adhäsionskoeffizienten basiert oder diesen anzeigt.

11. System, umfassend:
einen Empfänger (130), der konfiguriert ist, um Kriechmessungen und Zug-/Bremsmessungen von zumindest einem Schienenfahrzeugsystem (100) an verschiedenen Stellen entlang eines Streckensegments zu empfangen, während sich das zumindest eine Schienenfahrzeugsystem (100) durch das Streckensegment bewegt;
ein Berechnungsmodul (132), das konfiguriert ist, um tribologische Eigenschaften des Streckensegments an den verschiedenen Stellen zu berechnen, wobei die tribologischen Eigenschaften auf den Kriechmessungen und den Zug-/Bremsmessungen des zumindest einen Schienenfahrzeugsystems (100) basieren, wobei die tribologischen Eigenschaften einen Reibungskoeffizienten des Streckensegments an den verschiedenen Stellen anzeigen;
ein Analysemodul (134), das konfiguriert ist, um eine Wirksamkeit eines auf das Streckensegment angewandten Reibungsmodifikators basierend auf den tribologischen Eigenschaften zu bestimmen.

12. System nach Anspruch 11, wobei das Analysemodul (134) konfiguriert ist, um die tribologischen Eigenschaften an den verschiedenen Stellen mit erwarteten tribologischen Eigenschaften an den verschiedenen Stellen zu vergleichen.

13. System nach Anspruch 11 oder Anspruch 12, wobei das Analysemodul (134) konfiguriert ist, um einen oder mehrere Bereiche des Streckensegments zu identifizieren, die einen Betrag des Reibungsmodifikators aufweisen, der unterhalb eines ersten festgelegten Schwellenwerts liegt, und einen oder mehrere Bereiche des Streckensegments zu identifizieren, die einen Betrag des Reibungsmodifikators aufweisen, der oberhalb eines zweiten festgelegten Schwellenwerts liegt.

14. System nach einem der Ansprüche 11 bis 13, wobei der Empfänger (130) konfiguriert ist, um Kompensationsdaten bezüglich der Streckenbedingungen zu empfangen und wobei das Analysemodul konfiguriert ist, um die Wirksamkeit des Reibungsmodifikators unter Verwendung der Kompensationsdaten zum Kompensieren der Streckenbedingungen zu bestimmen.

15. System, umfassend:
ein Fahrzeugsteuermodul, das das System nach einem der Ansprüche 11 bis 14 aufweist, wobei das Fahrzeugsteuermodul konfiguriert ist, um Zug- und Bremsvorgänge eines Schienenfahrzeugsystems zu steuern;
ein Messmodul (212), das konfiguriert ist, um Kriechmessungen und Zug-/Bremsmessungen von dem Schienenfahrzeugsystem an verschiedenen Stellen entlang eines Streckensegments zu erhalten, während sich das Schienenfahrzeugsystem durch das Streckensegment bewegt; und
einen Sender (118), der konfiguriert ist, um die Kriechmessungen und Zug-/Bremsmessungen von dem Fahrzeugsystem zu kommunizieren;
wobei das Fahrzeugsteuermodul (210) konfiguriert ist, um die Zugkraft eines ersten Radsatzes um einen bestimmten Betrag zu erhöhen und die Zugkraft eines zweiten Radsatzes um den bestimmten Betrag zu verringern, wodurch die Gesamtzugkraft des Schienenfahrzeugsystems aufrecht erhalten wird, wobei das Messmodul (212) konfiguriert ist, um die Kriechmessungen und Zug-/Bremsmessungen zu erhalten, wenn der erste und der zweite Radsatz bei erhöhten bzw. verringerten Zugkräften arbeiten.

## Revendications

1. Procédé comprenant :
l'obtention de mesures de fluage et de mesures de traction/freinage à partir d'au moins un système de véhicule ferroviaire (100) à différents endroits le long d'un segment d'itinéraire alors que l'au moins un système de véhicule ferroviaire se déplace à travers le segment d'itinéraire ;
le calcul de caractéristiques tribologiques du segment d'itinéraire aux différents endroits, les caractéristiques tribologiques étant basées sur les mesures de fluage et les mesures de traction/freinage provenant de l'au moins un système de véhicule ferroviaire (100), dans lequel les caractéristiques tribologiques sont indicatives d'un coefficient de frottement du segment d'itinéraire aux différents endroits ; et
la détermination d'une efficacité d'un modificateur de frottement appliqué au segment d'itinéraire sur la base des caractéristiques tribologiques.

2. Procédé selon la revendication 1, dans lequel l'obtention des mesures de fluage et des mesures de traction/freinage inclut l'obtention d'une série des mesures de fluage et des mesures de traction/freinage tout au long du segment d'itinéraire de l'au moins un système de véhicule (100).

3. Procédé selon la revendication 1 ou la revendication 2, dans lequel le segment d'itinéraire fait au moins deux kilomètres de long et dans lequel les mesures de fluage et les mesures de traction/freinage sont obtenues, en moyenne, au moins une fois tous les 50 mètres pour le segment d'itinéraire.

4. Procédé selon l'une quelconque des revendications précédentes, dans lequel l'obtention des mesures de fluage et des mesures de traction/freinage à partir de l'au moins un système de véhicule (100) inclut l'obtention des mesures de fluage et des mesures de traction/freinage en réponse à l'augmentation d'un effort de traction d'un premier ensemble de roues d'une quantité désignée et à la réduction d'un effort de traction d'un second ensemble de roues de la quantité désignée, permettant ainsi de maintenir un effort de traction total de l'au moins un système de véhicule (100).

5. Procédé selon l'une quelconque des revendications précédentes, dans lequel l'obtention des mesures de fluage et des mesures de traction/freinage à partir de l'au moins un système de véhicule (100) inclut le fait que les mesures de traction/freinage sont représentatives d'efforts de traction maximum aux différents endroits.

6. Procédé selon l'une quelconque des revendications précédentes, dans lequel l'au moins un système de véhicule (100) fonctionne conformément à un plan de fonctionnement, le plan de fonctionnement incluant des instructions prédéterminées pour un ou plusieurs véhicules générateurs de propulsion de l'au moins un système de véhicule pour fournir au moins un d'un effort de traction désigné ou d'un effort de freinage désigné.

7. Procédé selon l'une quelconque des revendications précédentes, dans lequel l'au moins un système de véhicule (100) inclut au moins une locomotive et dans lequel une pluralité des mesures de fluage et une pluralité des mesures de traction/freinage sont obtenues à partir de l'au moins une locomotive.

8. Procédé selon l'une quelconque des revendications précédentes, comprenant en outre l'obtention de mesures de fluage et de mesures de traction/freinage à partir d'au moins un autre système de véhicule (100) distinct alors que l'au moins un autre système de véhicule distinct se déplace à travers le segment d'itinéraire, dans lequel le calcul des caractéristiques tribologiques du segment d'itinéraire inclut l'utilisation des mesures de fluage et des mesures de traction/freinage provenant de l'au moins un autre système de véhicule distinct.

9. Procédé selon l'une quelconque des revendications précédentes, dans lequel l'obtention des mesures de fluage et des mesures de traction/freinage inclut l'obtention des mesures de fluage et des mesures de traction/freinage au niveau d'au moins un système de surveillance externe, l'au moins un système de véhicule (100) étant une pluralité de systèmes de véhicule distincts qui se déplacent le long du segment d'itinéraire.

10. Procédé selon l'une quelconque des revendications précédentes, dans lequel la caractéristique tribologique est un coefficient d'adhérence ou est basée sur le coefficient d'adhérence ou indicative de celui-ci.

11. Système comprenant :
un récepteur (130) configuré pour recevoir des mesures de fluage et des mesures de traction/freinage à partir d'au moins un système de véhicule ferroviaire (100) à différents endroits le long d'un segment d'itinéraire alors que l'au moins un système de véhicule ferroviaire (100) se déplace à travers le segment d'itinéraire ;
un module de calcul (132) configuré pour calculer des caractéristiques tribologiques du segment d'itinéraire aux différents endroits, les caractéristiques tribologiques étant basées sur les mesures de fluage et les mesures de traction/freinage provenant de l'au moins un système de véhicule ferroviaire (100), dans lequel les caractéristiques tribologiques sont indicatives d'un coefficient de frottement du segment d'itinéraire aux différents endroits ; et
un module d'analyse (134) configuré pour déterminer une efficacité d'un modificateur de frottement appliqué au segment d'itinéraire sur la base des caractéristiques tribologiques aux différents endroits.

12. Système selon la revendication 11, dans lequel le module d'analyse (134) est configuré pour comparer les caractéristiques tribologiques aux différents endroits aux caractéristiques tribologiques escomptées aux différents endroits.

13. Système selon la revendication 11 ou la revendication 12, dans lequel le module d'analyse (134) est configuré pour identifier une ou plusieurs régions du segment d'itinéraire présentant une quantité du modificateur de frottement qui est inférieure à un premier seuil désigné et identifier une ou plusieurs régions du segment d'itinéraire présentant une quantité du modificateur de frottement qui est supérieure à un second seuil désigné.

14. Système selon l'une quelconque des revendications 11 à 13, dans lequel le récepteur (130) st configuré pour recevoir des données de compensation relatives aux conditions d'itinéraire et le module d'analyse est configuré pour déterminer l'efficacité du modificateur de frottement au moyen des données de compensation pour compenser les conditions d'itinéraire.

15. Système comprenant :
un module de commande de véhicule incluant le système selon l'une quelconque des revendications 11 à 14, le module de commande de véhicule étant configuré pour commander les opérations de traction et de freinage d'un système de véhicule ferroviaire ;
un module de mesure (212) configuré pour obtenir des mesures de fluage et des mesures de traction/freinage du système de véhicule ferroviaire à différents endroits le long d'un segment d'itinéraire alors que le système de véhicule ferroviaire se déplace à travers le segment d'itinéraire ; et
un émetteur (118) configuré pour communiquer les mesures de fluage et les mesures de traction/freinage provenant du système de véhicule ;
dans lequel le module de commande de véhicule (210) est configuré pour augmenter l'effort de traction d'un premier ensemble de roues d'une quantité désignée et réduire l'effort de traction d'un second ensemble de roues de la quantité désignée, permettant ainsi de maintenir un effort de traction total du système de véhicule ferroviaire, le module de mesure (212) étant configuré pour obtenir les mesures de fluage et les mesures de traction/freinage lorsque les premier et second ensembles de roues fonctionnent respectivement selon des efforts de traction augmentés et réduits.
